# EUROPEAN PATENT APPLICATION

(11) **EP 3 970 659 A1**
(43) Date of publication of application: **23.03.2022**
(21) Application number: 20805499.9
(22) Date of filing: 13.05.2020
(51) Int. Cl.: A61C 9/00

(54) **DENTAL IMPRESSION TRAY**

(30) Priority: 16.05.2019 JP 2019092986
(71) Applicant: GC Corporation, Sunto-gun, Shizuoka 410-1307 (JP)
(72) Inventor: SASAKI, Keiichi, Sendai-shi, Miyagi 980-8577 (JP); MICHII, Takayuki, Tokyo 174-8585 (JP)
(74) Representative: Müller-Boré & Partner Patentanwälte PartG mbB
(86) International application number: PCT/JP2020/019124
(87) International publication number: WO 2020/230818

(57) **Abstract**

A dental impression tray includes a tray body on which an impression material is placed when taking an impression, and an impression pressure adjusting part provided on at least one end of the tray body along a direction of a dental arch, and capable of adjusting an impression pressure. The impression pressure adjusting part is provided at a position opposing a retromolar pad when taking the impression, and is capable of adjusting the impression pressure by removing at least a portion from a rearmost portion thereof.

## Description

### TECHNICAL FIELD

The present disclosure relates to dental impression trays.

### BACKGROUND ART

In general, a silicone impression material, an alginate impression material, or the like is used to take an intraoral impression when making prostheses in dental treatment. In this case, an impression tray is used to intraorally insert and hold the impression material (refer to Patent Document 1, for example). That is, the impression material is placed on the impression tray which is inserted into a patient's oral cavity, and an intraoral shape is transferred to the impression material by pressing the impression material against the patient's oral cavity. After the impression material hardens, the impression tray, in a state integrally holding the impression material transferred with the intraoral shape, is removed from the oral cavity.

When taking the impression in this manner, it is necessary to take the impression of an alveolar ridge having a smooth curve in the case of an edentulous patient (including an almost edentulous patient). In this case, the impression material must be pressed against the alveolar ridge with a uniform force, thus requiring a very high skill. For this reason, the impression is often taken two times with respect to the edentulous patient, due to need to more accurately take the intraoral impression.

More particularly, a ready-made impression tray is used to take a first impression of the alveolar ridge, and an edentulous model is thereafter made from the hardened impression. An "individual tray", which is an impression tray exclusively for the edentulous patient, is made from the edentulous model. Next, a thin layer of impression material is placed on the individual tray to take a second impression of the alveolar ridge, and the second impression is used to make an accurate edentulous model.

### PRIOR ART DOCUMENTS

### PATENT DOCUMENTS

Patent Document 1: International Publication Pamphlet No. WO 2015/022805

### DISCLOSURE OF THE INVENTION

### PROBLEM TO BE SOLVED BY THE INVENTION

The difficulty of taking the impression is high for the edentulous patient when compared to a dentulous patient, because the impression is taken from a site which is extensive, including not only hard tissues but also soft tissues. More particularly, there is a soft tissue called a retromolar triangle (retromolar pad) behind a last molar of mandible. For this reason, when a conventional impression tray such as that described in Patent Document 1 is used, for example, an excessively high impression pressure applied to the retromolar, or an insufficient impression (insufficient spreading of the impression material), may easily occur.

Hence, there also is an impression tray having a shape in which the retromolar pad portion is removed in advance (for example, a Frame Cut Back tray (manufactured by YDM Corporation)). However, if the impression tray does not include a portion opposing the retromolar pad, the accuracy of the impression may deteriorate because it is not possible to take the impression of the retromolar pad.

Accordingly, one object of the present disclosure is to provide a dental impression tray which can take an accurate impression.

### MEANS OF SOLVING THE PROBLEM

A dental impression tray according to one aspect of embodiments of the present invention includes a tray body on which an impression material is placed when taking an impression; and an impression pressure adjusting part provided on at least one end of the tray body along a direction of a dental arch, and capable of adjusting an impression pressure, wherein the impression pressure adjusting part is provided at a position opposing a retromolar pad when taking the impression, and is capable of adjusting the impression pressure by removing at least a portion from a rearmost portion thereof.

### EFFECTS OF THE INVENTION

According to the present disclosure, it is possible to provide a dental impression tray which can take an accurate impression.

### BRIEF DESCRIPTION OF DRAWINGS

FIG. 1 is an assembled perspective view of a mandibular impression tray according to one embodiment.
FIG. 2 is an exploded perspective view of the mandibular impression tray illustrated in FIG. 1.
FIG. 3 is a perspective view of a tray body illustrated in FIG. 2 viewed from a mandibular side.
FIG. 4 is a plan view of the mandibular impression tray viewed from the maxillary side.
FIG. 5 is a plan view of the mandibular impression tray viewed from the mandibular side.
FIG. 6 is a schematic diagram for explaining a range of an impression pressure adjusting part.
FIG. 7A is a diagram illustrating an example of a first stage of a removal pattern of the impression pressure adjusting part.
FIG. 7B is a diagram illustrating an example of a second stage of the removal pattern of the impression pressure adjusting part.
FIG. 7C is a diagram illustrating an example of a third stage of the removal pattern of the impression pressure adjusting part.
FIG. 8 is a schematic diagram for explaining a position of a retromolar pad in an oral cavity.

### MODE OF CARRYING OUT THE INVENTION

Hereinafter, embodiments will be described with reference to the accompanying drawings. In order to facilitate the understanding of the description, the same constituent elements in each of the drawings are designated by the same reference numerals as much as possible, and a repeated description of the same constituent elements will be omitted.

In the following description, an x direction, a y direction, and a z direction are mutually perpendicular directions. The x and y directions are approximately horizontal directions, and the z direction is an approximately vertical direction. The x direction is a front-and-rear direction when a mandibular impression tray 1 (dental impression tray) is placed in an oral cavity, a positive x direction is a lip side, and a negative x direction is a throat side. The y direction is a leftand-right direction when the mandibular impression tray 1 is placed in the oral cavity, a positive y direction is a left side of a dental arch, and a negative y direction is a right side of the dental arch. The z direction is an up-and-down direction when the mandibular impression tray 1 is placed in the oral cavity, a positive z direction is a maxillary side, and a negative z direction is a mandibular side.

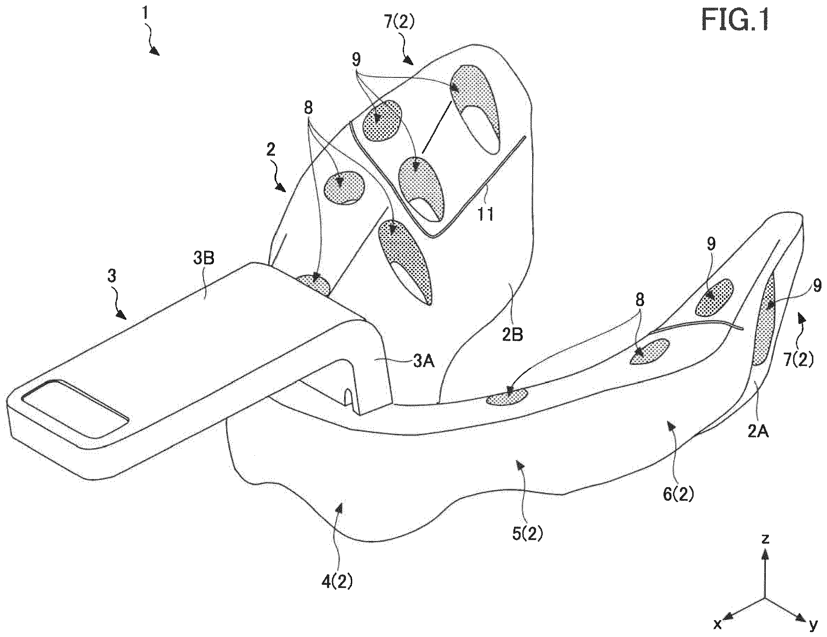

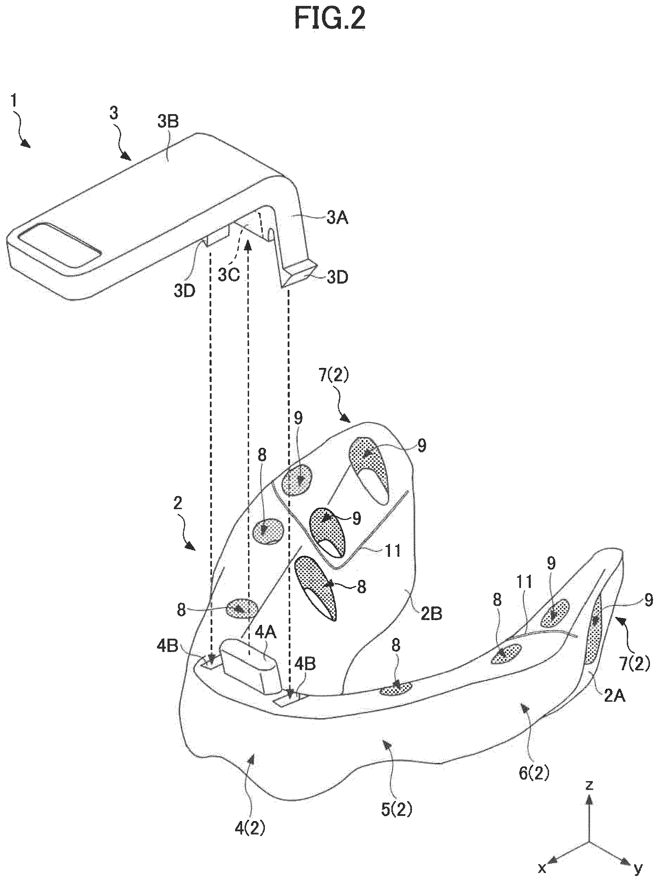

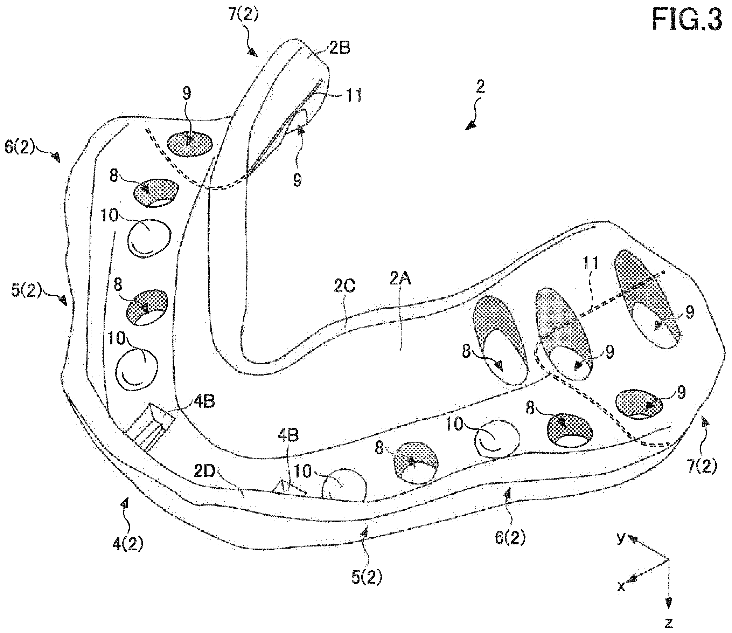

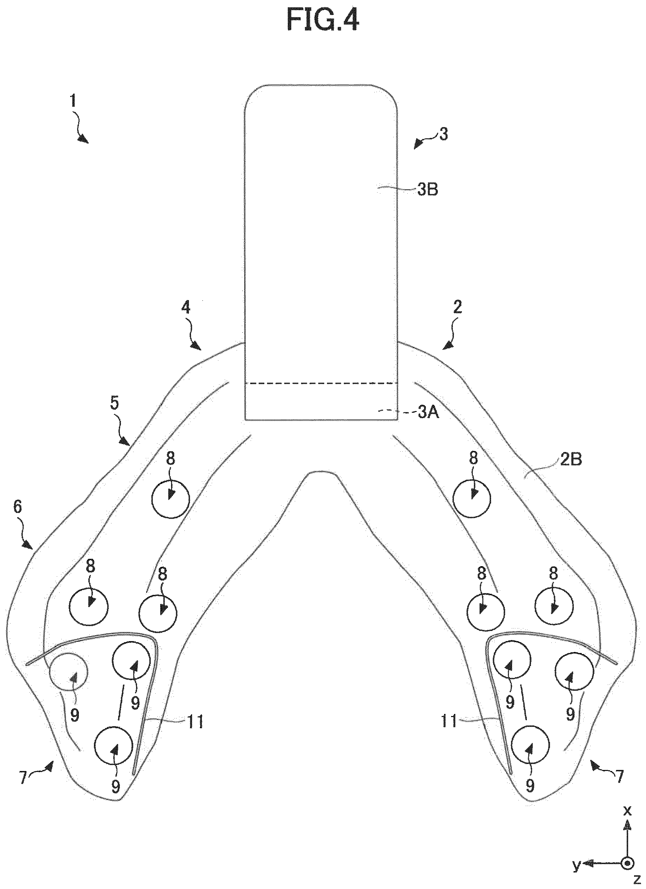

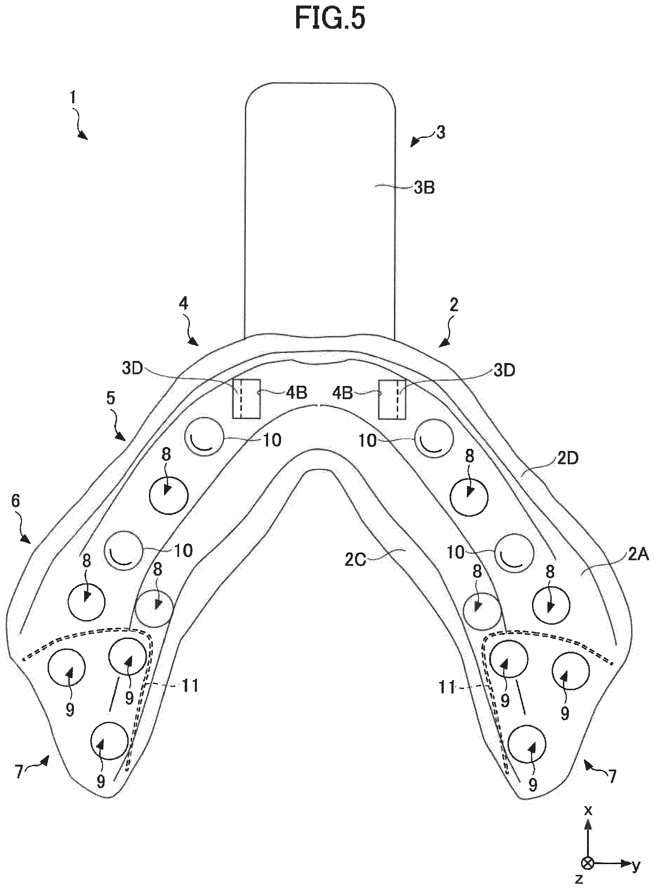

FIG. 1 is an assembled perspective view of the mandibular impression tray 1 according to one embodiment. FIG. 2 is an exploded perspective view of the mandibular impression tray 1 illustrated in FIG. 1. FIG. 3 is a perspective view of a tray body 2 illustrated in FIG. 2 viewed from the mandibular side. FIG. 4 is a plan view of the mandibular impression tray 1 viewed from the maxillary side. FIG. 5 is a plan view illustrating the mandibular impression tray 1 viewed from the mandibular side.

The mandibular impression tray 1 is an example of a dental impression tray, and is an instrument which holds an impression material for taking a mandibular impression in the oral cavity. The mandibular impression tray 1 illustrated in FIG. 1 is for an edentulous patient. As illustrated in FIG. 1 and FIG. 2, the mandibular impression tray 1 includes a tray body 2, and a handle 3. The impression which is taken is used to make a mandibular prostheses. For example, a silicone impression material or an alginate impression material is used as the impression material. The tray body 2 and the handle 3 are formed of a resin material (plastic), such as polyacetal, polycarbonate, or the like, for example

The tray body 2 is a component on which the impression material is placed when taking the impression. From a viewpoint of reducing an amount of the impression material used, the tray body 2 according to this embodiment is formed to have a configuration including an outer peripheral shape and concavo-convexes, simulating a general shape of the oral cavity excluding a tongue portion at a mandible, as illustrated in FIG. 1 through FIG. 5. That is, the outer peripheral shape of the tray body 2 is a curved shape simulating a dental arch shape, protruding in the positive x direction (lip side), and a central portion surrounded by this arch shape is an air space because the central portion corresponds to the tongue portion. The concavo-convex shape of the tray body 2 is formed so as to protrude in the positive z direction (maxillary side), similar to a mandibular alveolar ridge, that is, so that a cross sectional shape viewed from a direction of the dental arch becomes an arch shape protruding toward the maxillary side.

The shape of the tray body 2 illustrated in FIG. 1 through FIG. 5 is merely an example, and the shape employed in a known mandibular impression tray may be applied.

The tray body 2 is formed to the shape described above having approximately the same thickness, and has an impression material filling surface 2A which is a concave curved surface facing the negative z direction side as illustrated in FIG. 1 through FIG. 3 and FIG. 5, and a maxillary opposing surface 2B which is a convex curved surface facing the positive z direction side as illustrated in FIG. 1 through FIG. 4. The impression material placed on the impression material filling surface 2A when taking the impression. The maxillary opposing surface 2B is mounted to face the maxillary side when taking the impression.

As illustrated in FIG. 1 through FIG. 5, the tray body 2 is provided with a plurality of through holes 8 and 9 penetrating the tray body 2 in a plate thickness direction thereof, between the impression material filling surface 2A and the maxillary opposing surface 2B, to allow the impression material to flow therethrough when the impression material is pressed and deformed. The through holes 8 and 9 preferably have a diameter of approximately 1 mm to approximately 5 mm. In addition, as illustrated in FIG. 3 and FIG. 5, the tray body 2 is provided with spacers 10 projecting in the negative z direction from the impression material filling surface 2A, and the spacers 10 are configured to prevent the tray body 2 from making close contact with the alveolar ridge when taking the impression.

The configuration of the tray body 2 will be described in more detail. The tray body 2 has an anterior teeth part 4 disposed at an arch shaped central portion, a pair of premolar parts 5 adjacent on both sides of the anterior teeth part 4 along the y direction, and a pair of molar parts 6 adjacent to the throat side (negative x direction) from the premolar parts 5. The anterior teeth part 4, the premolar parts 5, and the molar parts 6 are disposed to oppose the anterior teeth part, the premolar parts, and the molar parts of the mandible, respectively, when the tray body 2 is placed on the mandibular alveolar ridge. Because this embodiment relates to the tray for the edentulous patient, as illustrated in FIG. 3, an inner wall 2C on a central side (tongue side) of the arch shape of the tray body 2 in the direction of the dental arch, is formed to extend longer toward the mandibular side (negative z direction) than an outer wall 2D on the outside. In addition, the inner wall 2C is formed so as to extend from the anterior teeth part 4, longer towards the premolar parts 5 and the molar parts 6.

The handle 3 applies an external force on the tray body 2 when taking the impression, to generate an impression pressure. The handle 3 is detachably attached to the maxillary opposing surface 2B of the anterior teeth part 4 of the tray body 2, as illustrated in FIG. 1 and FIG. 2, for example.

The handle 3 has an engaging portion 3A extending in the z direction side to engage/disengage with the anterior teeth part 4, and a holding portion 3B which bends approximately at a right angle from the engaging portion 3A toward the positive x direction side and extends in the positive x direction side.

A protrusion 4A protruding in the positive z direction is provided on the maxillary opposing surface 2B of the anterior teeth part 4, at an approximate center position along the y direction, and a pair of engaging holes 4B are provided on both sides of the protrusion 4A along the y direction. On the other hand, a cavity portion 3C to which the protrusion 4A fits, and engaging claws 3D disposed on both sides of the cavity portion 3C along the y direction, are provided at an end of the engaging portion 3A of the handle 3 on the negative z direction side, and the engaging claws 3D are inserted into and engage with the pair of engaging holes 4B. The handle 3 is attached to the tray body 2 by causing the engaging portion 3A to approach the anterior teeth part 4 from the positive z direction side, so that the cavity portion 3C is fitted with the protrusion 4A, and the engaging claws 3D are inserted into and engage with the engaging hole 4B.

In a state where the engaging portion 3A is engaged to the tray body 2, an operator can apply an external force to the holding portion 3B toward the negative z direction side, and transmit this external force to the tray body 2 via a coupling portion thereof with the engaging portion 3A. As a result of the external force transmitted to the tray body 2, the impression pressure is applied to the impression material and the alveolar ridge. Here, the "impression pressure" refers to a pressure applied to an alveolar ridge mucosa when the impression material is placed and the impression tray is pressed against the alveolar ridge.

The handle 3 simply needs to be detachable with respect to the tray body 2, and an engaging structure between the handle 3 and the tray body 2, and the shape of the holding portion 3B of the handle 3, may be other than those of the examples of the configurations illustrated in FIG. 2 or the like.

Preferably, the plurality of through holes 8 and 9 are provided so that center axes thereof are aligned in the same direction. More particularly, the direction of the center axes of the plurality of through holes 8 and 9 are more preferably a pressure applying direction (z direction) with respect to the tray body 2 when taking the impression. According to this configuration, the impression material is allowed to more easily flow through the through holes 8 and 9 when applying the pressure to take the impression, and it is possible to prevent the impression pressure from becoming excessively high. In addition, the manufacturing is facilitated by aligning the through holes 8 and 9 in the same direction.

In particular, in this embodiment, a pair of impression pressure adjusting parts 7 which are capable of adjusting the impression pressure is provided at both ends along the direction of the dental arch of the tray body 2, that is, on the negative x direction side of the pair of molar parts 6. The impression pressure adjusting part 7 is provided at a position opposing the retromolar pad (position on the throat side of the molar) when taking the impression, and is capable of adjusting the impression pressure by cutting and removing at least a portion from a rearmost portion thereof. The impression pressure adjusting part 7 can be cut using a dental handpiece or the like, for example.

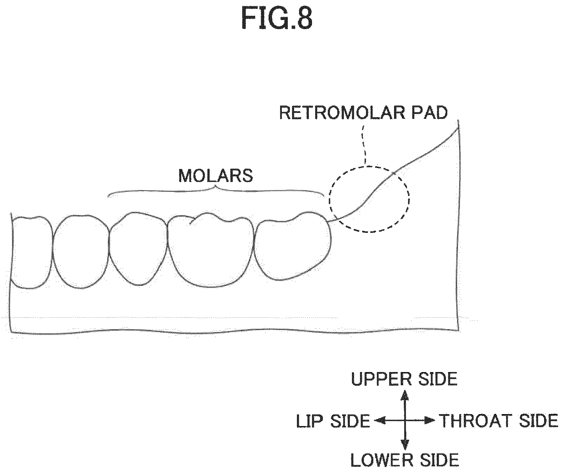

FIG. 8 is a schematic diagram for explaining the position of the retromolar pad in the oral cavity. As illustrated in FIG. 8, the retromolar pad is a nodular soft tissue region located at a position on the throat side (negative x direction side) of the molars of the alveolar ridge. In the conventional impression trays described in Patent Document 1 or the like, the trays are often formed to a position covering the region of the retromolar pad.

Properties of the retromolar pad, such as a degree of inclination from the molars to the maxilla, a protruding amount, softness, or the like illustrated in FIG. 8, vary for each patient due to individual differences. For this reason, in conventional impression tray, if the retromolar pad protrudes greatly toward the maxillary side, for example, the end of the tray on the throat side may press the retromolar pad too strongly when taking the impression, thereby applying an excessively high impression pressure on the retromolar pad. On the contrary, if the retromolar pad does not protrude greatly toward the maxillary side, the end of the tray on the throat side may not be able to sufficiently press the retromolar pad when taking the impression, thereby resulting in an inadequate impression (insufficient spreading of the impression material). Hence, in the conventional impression tray, it may not be possible to take the impression with a desired impression pressure, depending on the differences in the properties of the retromolar pad.

In order to avoid the accuracy of the impression from deteriorating due to the properties of the retromolar pad, there are existing impression trays having the retromolar pad removed in advance (for example, Frame Cut Back tray (manufactured by YDM Corporation)). However, if the impression tray does not have a portion opposing the retromolar pad, the accuracy of the impression may deteriorate because it is not possible to take the impression of the retromolar pad.

In addition, the conventional impression trays are limited to a product of the type that covers the entire retromolar pad, or a product of the type having the shape with the retromolar pad removed in advance, and a dentist had to choose the tray to be used between the two types. Because the shape of the tray body is not uniform for each of the types, the dentist had to tolerate a variation in the impression which can be taken when using different types of impression trays.

With respect to these conventional problems, the impression tray 1 according to this embodiment includes the impression pressure adjusting part 7 capable of adjusting the impression pressure, by cutting and removing at least a portion from a rearmost portion thereof as described above. Accordingly, the impression pressure is adjustable by cutting the impression pressure adjusting part 7 according to the properties of the patient's retromolar pad, and the impression of the retromolar pad can be taken with the desired impression pressure, thereby enabling the impression to be taken with a high accuracy.

Moreover, by removing the impression pressure adjusting part 7, the impression pressure can be adjusted while maintaining the shapes of the other parts of the tray body 2 (anterior teeth part 4, the premolar part 5, and the molar part 6) to the same shape. For this reason, unlike the conventional case where different types of impression trays need to be used depending on the properties of the retromolar pad, a single product can produce individual trays to suit multiple patients, and it is possible to improve the convenience of the dentist.

A partition line 11 is provided on the tray body 2 at a boundary position between a region where molars are originally present at a rearmost portion of the dental arch and the retromolar pad when taking the impression, and the impression pressure adjusting part 7 is provided on an inner side (negative x direction side) of the partition line 11. According to this configuration, a range of the impression pressure adjusting part 7 can be clearly indicated to the dentist, to provide an indicator of the extent to which the impression pressure adjusting part 7 can be cut when performing an impression pressure adjusting operation, which is particularly effective with respect to an unskilled dentist.

In this embodiment, the partition line 11 is formed as a convex line protruding from the maxillary opposing surface 2B, however, the partition line 11 need only be visible on the maxillary opposing surface 2B, and the partition line 11 may be other than the convex line. For example, the partition line 11 may be formed as a concave line which caves in from the maxillary opposing surface 2B, or as a printed line printed on the maxillary opposing surface 2B. In addition, the type of line is not limited to a solid line, and may be a dashed line, a series of round dots, or the like.

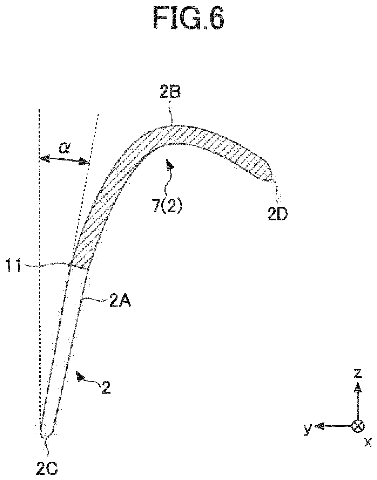

FIG. 6 is a schematic view for explaining the range of the impression pressure adjusting part 7. FIG. 6 schematically illustrates the shape of a part of the tray body 2, corresponding to the impression pressure adjusting part 7 on the negative y direction side, viewed from even more the rear side (negative x direction side) of this part. As illustrated in FIG. 1 or the like, the range of the impression pressure adjusting part 7 along the x direction is more on the rear side than a boundary with the molar part 6. The range of the impression pressure adjusting part 7 along the z direction is more on the upper side than an intermediate position of the inner wall 2C of the tray body 2, as illustrated in FIG. 1 through FIG. 3, and FIG. 6. This intermediate position will be described in more detail. As illustrated in FIG. 6, the intermediate position is where the maxillary opposing surface 2B is inclined by a predetermined angle α with respect to the vertical direction, from the lower end of the inner wall 2C of the tray body 2. That is, the region of the impression pressure adjusting part 7 in the view long the x direction may be represented as a range in which the maxillary opposing surface 2B is inclined by the predetermined angle α (for example, 30 degrees) or more in the negative y direction with respect to the z axis.

Further, the impression pressure adjusting part 7 is formed to have a porosity per unit area higher than other parts (the anterior teeth part 4, the premolar part 5, and the molar part 6) of the tray body 2, that is, so that it is possible to reduce the effort required to cut the impression pressure adjusting part 7 and facilitate a cutting operation.

More particularly, by providing the plurality of through holes 9, the impression pressure adjusting part 7 has a higher porosity per unit area than the other parts of the tray body 2. As illustrated in FIG. 1 through FIG. 5, the area of the impression pressure adjusting part 7 defined by the partition line 11 is smaller than the area of the other parts (the anterior teeth part 4, the premolar part 5, and the molar part 6) of the tray body 2. On the other hand, the number of through holes 9 provided in the impression pressure adjusting part 7 is the same as the number of through holes 8 provided in the other parts of the tray body 2 (three through holes each are illustrated the examples of FIG. 1 through FIG. 5). As a result, the porosity of the impression pressure adjusting part 7 becomes high, and the cutting of the impression pressure adjusting part 7 is facilitated by this configuration.

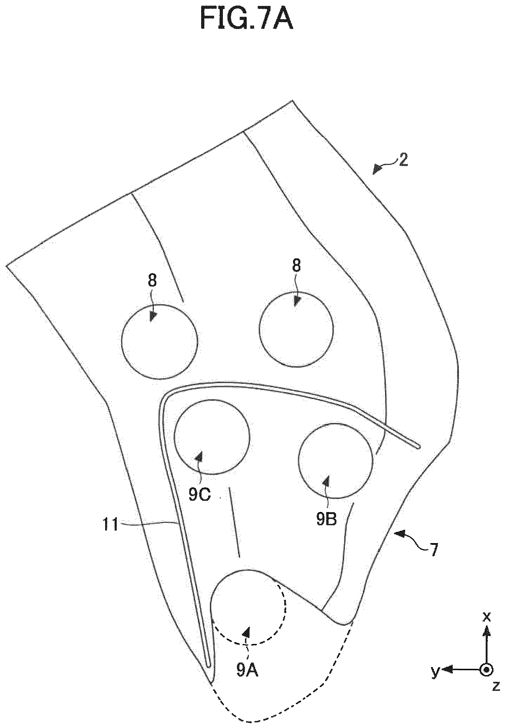

Moreover, the through holes 9 provided in the impression pressure adjusting part 7 are disposed along the partition line 11. According to this configuration, the cutting of the impression pressure adjusting part 7 along the partition line 11 can further be facilitated, and the adjustment of the impression pressure in multiple stages can be facilitated. This will further be described with reference to FIG. 7A through FIG. 7C.

FIG. 7A through FIG. 7C illustrate examples of the first through third stages of a removal pattern of the impression pressure adjusting part 7. For the sake of convenience, among the three through holes 9 provided in the impression pressure adjusting part 7, a through hole 9A is located on the most negative z direction side, a through hole 9B is located on the most negative y direction side, and a through hole 9C is located on the most positive x direction side. That is, the through hole 9A, the through hole 9C, and the through hole 9B are disposed in this order along the partition line 11 from the rear side.

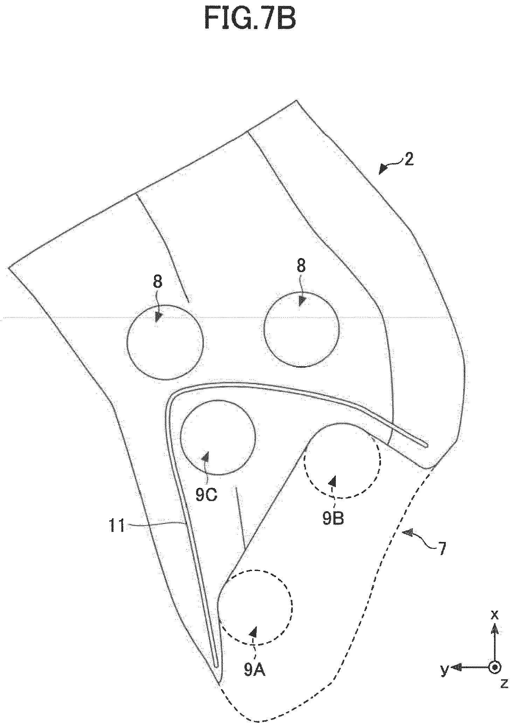

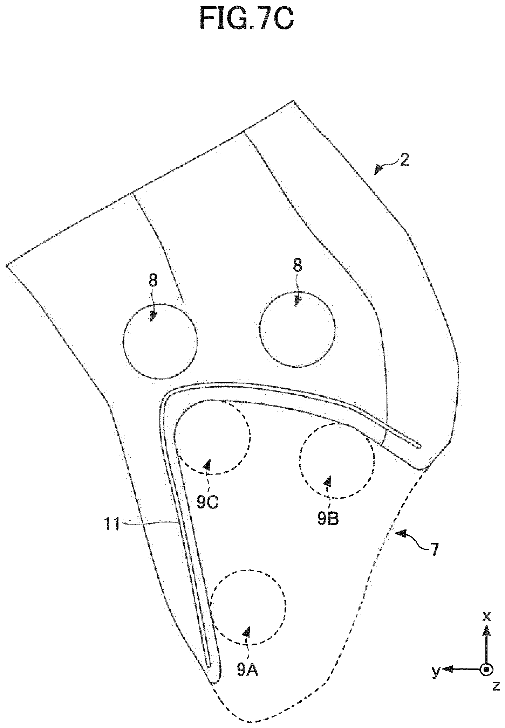

When cutting and removing the impression pressure adjusting part 7, a portion of the rearmost end of the impression pressure adjusting part 7 is first removed by cutting along the through hole 9A in the first stage of the removal pattern, as illustrated in FIG. 7A. Next, the entire rear end of the impression pressure adjusting part 7 is then removed by cutting along the through hole 9B in addition to the through hole 9A in the second stage of the removal pattern, as illustrated in FIG. 7B. Further, the entire impression pressure adjusting part 7 is removed by cutting along the through hole 9C in the third stage of the removal pattern, as illustrated in FIG. 7C.

Accordingly, by disposing the plurality of through holes 9A, 9B, and 9C along the partition line 11, the portions of the through holes 9A, 9B, and 9C need not be cut when cutting the impression pressure adjusting part 7 along the partition line 11, thereby making it even easier to remove the impression pressure adjusting part 7. In addition, if the cutting progresses along the through holes 9A, 9B, and 9C, the impression pressure adjusting part 7 can be removed in multiple stages as illustrated in FIG. 7A through FIG. 7C, and the adjustment of the impression pressure in multiple stages can be facilitated.

This embodiment was described with reference to the specific examples. However, the present disclosure is not limited to these specific examples. The specific examples added with design modifications by those skilled in the art, as appropriate, also fall within the scope of the present disclosure as long as the examples include the features of the present disclosure. Each of the elements included in each of the specific examples described above, and the arrangement, conditions, shape, or the like of each of the elements, are not limited to those of the examples, and may be modified, as appropriate. Each of the elements included in each of the specific examples may vary in combination, as appropriate, unless a technical contradiction is introduced by the combination.

In the embodiment described above, the mandibular impression tray 1 for the edentulous patient is illustrated as the dental impression tray according to the embodiment, however, a mandibular impression tray for a patient having several remaining teeth may be used as the dental impression tray according to the embodiment.

In the embodiment described above, the illustrated impression pressure adjusting part 7 is configured to include the plurality of through holes 9, however, other configurations may be employed as long as the porosity per unit area of the impression pressure adjusting part 7 can be set high. For example, the through holes 9 may have a polygonal shape instead of a circular shape as illustrated in the drawings, or have a configuration obtained by subjecting the impression pressure adjusting part 7 to a slitting process or a meshing process.

Similarly, although the configuration illustrated in the embodiment described above is provided with the plurality of through holes 9 in the impression pressure adjusting part 7, other configurations may be employed as long as the impression pressure adjusting part 7 can be cut easily. For example, the configuration may include the impression pressure adjusting part 7 having a thickness smaller than thickness of other parts of the tray body 2. In addition, the number of through holes 9 provided in the impression pressure adjusting part 7 may be other than three.

Although the configuration illustrated in the embodiment described above is provided with the partition line 11 between the molar part 6 and the impression pressure adjusting part 7 of the tray body 2, the partition line 11 need not be provided in the configuration if the range of the impression adjusting part 7 is clear due to configurations, such as the configuration which increases the porosity per unit area of the impression pressure adjusting part 7, the configuration which facilitates the cutting of the impression pressure adjusting part 7, or the like.

The configuration illustrated in the embodiment described above is provided with the impression pressure adjusting part 7 on both ends along the direction of the dental arch of the tray body 2, however, the impression pressure adjusting part 7 may be provided on only one of the two ends along the direction of the dental arch of the tray body 2.

The configuration illustrated in the embodiment described above adjusts the impression pressure by cutting and removing at least a portion of the rearmost portion of the impression pressure adjusting part 7, however, the method of removing the impression pressure adjusting part 7 may be other than cutting, such as a method of folding and breaking the ends to disconnect the ends, or the like, for example.

This international application is based upon and claims priority to Japanese Patent Application No. 2019-092986, filed on May 16, 2019, the entire contents of which are incorporated herein by reference.

### DESCRIPTION OF THE REFERENCE NUMERALS

- 1: Mandibular impression tray (dental impression tray)
- 2: Tray body
- 2A: Impression material filling surface
- 2B: Maxillary opposing surface
- 2C: Inner wall
- 2D: Outer wall
- 3: Handle
- 4: Anterior teeth part
- 5: Premolar parts
- 6: Molar parts
- 7: Impression pressure adjusting parts
- 8, 9: Through holes
- 10: Spacer
- 11: Partition line

## Claims

1. A dental impression tray comprising:
a tray body on which an impression material is placed when taking an impression; and
an impression pressure adjusting part provided on at least one end of the tray body along a direction of a dental arch, and capable of adjusting an impression pressure,
wherein the impression pressure adjusting part is provided at a position opposing a retromolar pad when taking the impression, and is capable of adjusting the impression pressure by removing at least a portion from a rearmost portion thereof.

2. The dental impression tray as claimed in claim 1, wherein the impression pressure adjusting part is formed to have a porosity higher than other parts of the tray body.

3. The dental impression tray as claimed in claim 1, wherein the impression pressure adjusting part is formed to have a thickness smaller than other parts of the tray body.

4. The dental impression tray as claimed in claim 1, wherein a partition line is provided on the tray body at a boundary position between a region where molars are originally present at a rearmost portion of the dental arch and the retromolar pad when taking the impression, and the impression pressure adjusting part is provided on an inner side of the partition line.

5. The dental impression tray as claimed in claim 1, wherein the impression pressure adjusting part is provided with a plurality of through holes, thereby having porosity higher than other parts of the tray body.

6. The dental impression tray as claimed in claim 5, wherein the plurality of through holes is provided so that center axes thereof are aligned in the same direction.

7. The dental impression tray as claimed in claim 6, wherein the direction in which the center axes of the plurality of through holes are aligned is a pressure applying direction with respect to the tray body when taking the impression.

8. The dental impression tray as claimed in claim 5, wherein the plurality of through holes is disposed along a partition line provided at a boundary position between the impression pressure adjusting part and the other parts of the tray body.

9. The dental impression tray as claimed in
claim 1, wherein the tray body is for edentulous mandibular use.

10. The dental impression tray as claimed in claim 1, comprising:
a handle detachably attached to the tray body, and applying an external force to the tray body when taking the impression, to generate the impression pressure.
